# EUROPEAN PATENT APPLICATION

(11) **EP 0 962 724 A2**
(43) Date of publication of application: **08.12.1999**
(21) Application number: 99500092.4
(22) Date of filing: 04.06.1999
(51) Int. Cl.: F24J 2/26

(54) **Solar energy collecting panels**

(30) Priority: 05.06.1998 ES 9801180
(71) Applicant: Urbina Casanovas, Pablo, 25700 La Seu d'Urgell, Lerida (ES); Urbina Cortabitarte, Pablo, 25700 La Seu d'Urgell, Lerida (ES)
(72) Inventor: Urbina Casanovas, Pablo, 25700 La Seu d'Urgell, Lerida (ES); Urbina Cortabitarte, Pablo, 25700 La Seu d'Urgell, Lerida (ES)
(74) Representative: Canadell-Isern, Roberto

(57) **Abstract**

SOLAR ENERGY COLLECTING PANELS, comprising a box (1) enclosed by a pane of glass, with insulation (2), inside which there is a coil (4) coupled to a black absorbing cover (6). This cover (6) absorbs the heat that is sent to a fluid, basically characterized because of the fact that the surface of the absorbing plate has been provided with a regularly distributed grooved half sphere (14), preferably every square centimeter. This constitutes a tridimensional surface that considerably increases the collecting surface area and also results in the fact that, when hitting the half spheres (14), an enveloping effect occurs that practically results in the complete absorption of the radiation it receives and the half spheres (14) collect the solar radiation from any perpendicular angle.

## Description

This request for a patent refers to the improvement of solar energy collecting panels.

The technique of exploiting solar energy by means of greenhouse boxes or panels is more than well known, the fabrication system and other characteristics of which are more than revealed in thermal texts with their corresponding schemes, which give a general idea of how to construct a conventional collecting panel The main integrating components consist of a box closed by one or various panes of glass inside which there is a coil joined by a weld to a plate surface completely covered with a black coating that absorbs the solar radiation and transmits the heat to a circulating fluid, with the peculiarity that the inside of the collecting panel is completely protected with thermal insulation to avoid calorific losses.

The purpose of this invention is to make improvements directed towards providing noteworthy betterment in the performance of the referred panels or greenhouse boxes, in order to achieve collecting a maximum of energy with the minimum of surface. These improvements are obtained as a consequence of using a very purifying technique resulting from arduous investigation work.

### HISTORY OF THE INVENTION

At present, and as a reference to the state-of-the-art, it should be mentioned that the Spanish invention patent no. 464.846 is known, which consists in the improvements of the solar energy collecting panels of the type that includes a box enclosed by a pane of glass inside which there is a coil insulated with a cover painted in black. This cover absorbs the heat that is sent to a fluid which is characterized by the fact of providing a coating treatment of the inside surface of the pane of glass closing the box of the panel, consisting in a layer of silver nitrate that performs a function of mirror exclusively in the mentioned inside surface of the pane of glass, in order to permit normal entry of the solar radiation but to prevent exit of the irradiation of the infrared rays. These rays, on hitting the mentioned layer of silver nitrate have a continuous rebound effect which provides maximum performance and the surface opposite the pane of glass and neighboring sides are coated with a polished aluminum plate. The mission of this plate is to reflect the heat and project it towards the plate or receiving cover provided with a coating of black chrome.

The Spanish addition certificate no. 489.375 is also known. It consists of improvements in the main patent no. 464.846 by bettering the solar energy collecting panels, characterized by the fact that the eleven parallel pipes making up the radiator for circulation of the fluid are arranged at a distance between axes of eighty-four and a half millimeters, which is considered the ideal distance for transmitting the heat received.

Likewise, the Spanish addition certificate no. 506.703 is known. This consists in improvements of the main patent no. 464.846 by bettering the solar energy collecting panels, characterized by the fact that the number of pipes making up the radiator is estimated in sixteen and that the distance between axes of the mentioned pipes is fifty-seven millimeters.

### DESCRIPTION OF THE INVENTION

The improvements in the solar energy collecting panels, purpose of this invention, refer to the fact of making the surface of the absorbing plate tridimensional by means of pressing grooves in which the coil tubes are located and in a half sphere pressing, preferably every square centimeter, thus achieving a considerable increase in the surface area at the same time as obtaining that the half spheres make an enveloping effect of the radiation they receive which increases the collecting performance and also that the radiation received is more direct from any angle.

As is common to all the conventional panels, the face opposite the pane of glass and neighboring sides is coated with an insulating layer. Another of the improvements, purpose of this invention, affect said surface. This improvement consists in the fact of coating the mentioned face and sides with a polished aluminum plate, the mission of which is to reflect the color by projecting it towards the receiving plate. Apart from increasing the performance of the insulation devices in the high ranges of temperature, it provides a notable increase in the duration of the surfaces exposed to the sun, both from the point of view of the corrosion and the resistance to the heat cycle. As is usual, this layer is provided with the corresponding grooves in which the same number of ducts are housed The ends of these ducts join two other ducts of a larger size through which the fluid enters and exits.

The side walls of the box are covered with metallic laminated sections with a selective black coating the same as the receiving plate.

Two of the opposite sides of the box are covered with L-shaped sections and the other two with similar sections, although the inferior edge has a small fold that determines the formation of a cavity underneath which the entry and exit pipes are located.

Likewise, the containing box is provided with one or two panes of glass on the front. To complement the description outlined below and in order to better understand its characteristics, a set of drawings is attached to this description, the figures of which represent the most significant details of the invention in an illustrative and unlimited way.

### BRIEF DESCRIPTION OF THE DRAWINGS

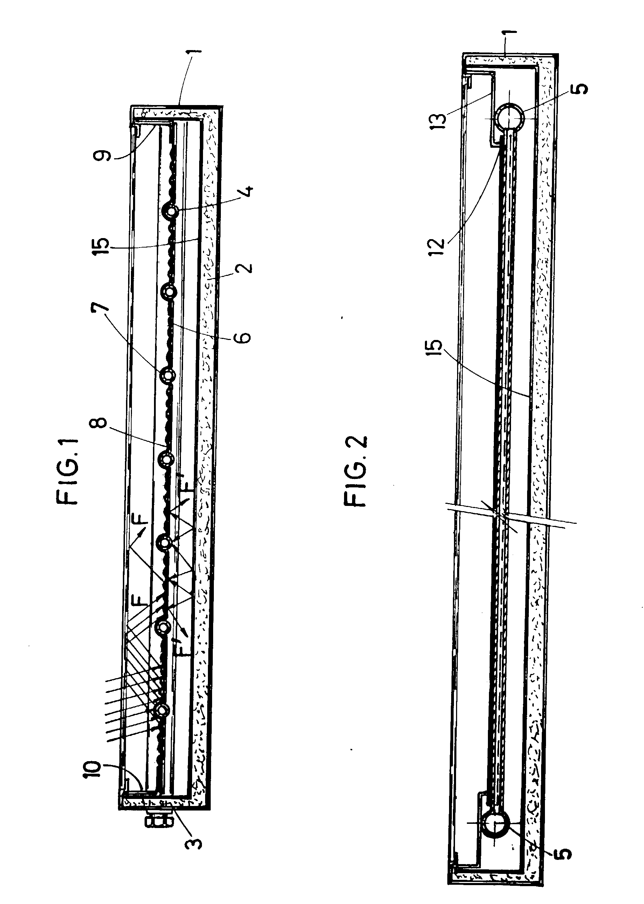

Figure 1: Shows a transversal section view of a panel of the type of the invention.

Figure 2: Shows a longitudinal section of the same panel.

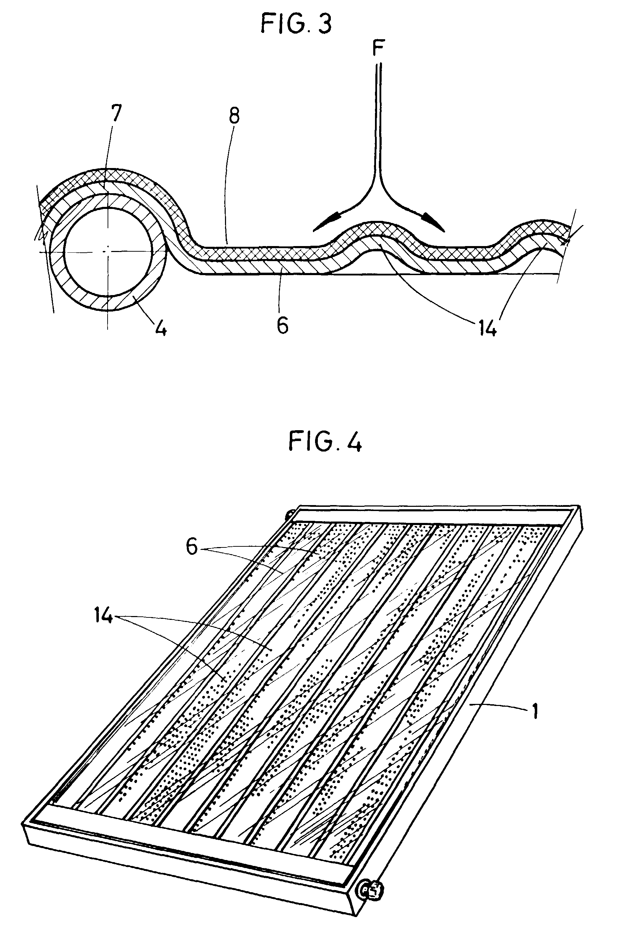

Figure 3: Shows a detail corresponding to a half sphere and the enveloping effect produced by the solar radiation in said sphere.

Figure 4: Shows a perspective view of said panel.

### DESCRIPTION OF A PREFERRED PERFORMANCE

In view of the above figures and in accordance with the numbering used, a panel of the type that includes a box 1 with the bottom coated with an insulation layer 2 can be seen, such as glass fiber or suitable material. Likewise, the inside sides of the box are also provided with coatings 3 of said insulating material.

On layer 2, a radiator made up of a set of parallel pipes 4, preferably in the number of 10, is located with their extremes connected to two pipes 5 of a larger diameter, one for entry and the other for exit, whilst on the radiator a metallic plate 6 is located, with its pressing grooves 7 in which the pipes 4 are placed. The referred to plate 6 is of copper or aluminum and its front is provided with a selective black coating 8 for the calorific rays of the solar irradiation.

Two of the internal opposite sides of the box 1 are covered with identical L-shaped metallic transversal sections 9 with a coating 10 the same as 8. These sections are joined along their lower branch on the edges of the plate 6.

The other two inside sides of the box 1 are covered with metallic sections 11, also coated the same as the others, and the transversal section is L-shaped, even though the edge of the lower branch has a fold 12 that determines the formation of a housing 13 underneath which the pipes 5 are located.

Up to this point a conventional panel and some characteristic constructive details that are not the reason for the improvements proposed in this invention have been described. These improvements refer specifically to the fact of providing the external surface of the absorbing plate surface with a half sphere grooving 14, preferably every square centimeter, with which, thanks to said grooving, an increase in the area of the surface, an increase in solar radiation collecting due to the enveloping effect of the half sphere are produced and, also, that the radiation collecting is more direct from any angle.

Likewise, another of the improvements purpose of the invention consists in the fact that the bottom and sides of the insulation box are covered by polished aluminum plate 15, the mission of which is to reflect the heat and project it towards the back part of the absorbing surface 6, as shown by arrows "F".

## Claims

1. IMPROVEMENTS IN THE SOLAR ENERGY COLLECTING PANELS, of the type that includes a box enclosed by a pane of glass, with insulation, inside which there is a coil coupled to a black absorbing cover. This cover absorbs the heat that is sent to a fluid, basically characterized because of the fact that the surface of the absorbing plate has been provided with a regularly distributed grooved half sphere, preferably every square centimeter. This constitutes a tridimensional surface that considerably increases the collecting surface area and also results in the fact that, when hitting the half spheres an enveloping effect occurs that practically results in the complete absorption of the radiation it receives and the half spheres collect the solar radiation from any perpendicular angle.
